# EUROPEAN PATENT SPECIFICATION

(11) **EP 3 096 214 B1**
(45) Date of publication and mention of the grant of the patent: **20.03.2019**
(21) Application number: 14879109.8
(22) Date of filing: 15.01.2014
(51) Int. Cl.: G06F 3/0486, G06F 3/0488, G06F 3/0481, H04M 1/725, H04M 1/67

(54) **TERMINAL CONTROL METHOD AND TERMINAL CONTROL DEVICE**
ENDGERÄTESTEUERUNGSVERFAHREN UND ENDGERÄTESTEUERUNGSVORRICHTUNG
PROCÉDÉ DE COMMANDE D'UN TERMINAL ET DISPOSITIF DE COMMANDE D'UN TERMINAL

(43) Date of publication of application: 23.11.2016
(73) Proprietor: Yulong Computer Telecommunication Scientific (Shenzhen) Co., Ltd., Shenzhen, Guangdong 518057 (CN)
(72) Inventor: LI, Hangui, Shenzhen Guangdong 518057 (CN); ZOU, Kuan, Shenzhen Guangdong 518057 (CN); LIU, Feng, Shenzhen Guangdong 518057 (CN)
(74) Representative: Mewburn Ellis LLP
(86) International application number: PCT/CN2014/070636
(87) International publication number: WO 2015/106398

(56) References cited:
- WO-A1-2013/127055
- CN-A- 103 164 120
- CN-A- 103 299 263
- US-A1- 2010 024 020
- Craig Villamor ET AL: "Touch Gesture REFERENCE CARDS", , 26 June 2011 (2011-06-26), pages 1-23, XP055015503, World Wide Web Retrieved from the Internet: URL:http://www.lukew.com/touch/TouchGestur eCards.pdf [retrieved on 2011-12-29]

## Description

### FIELD OF THE INVENTION

The present invention relates to the technical field of terminal control, and particularly to a terminal control method and a terminal control device.

### BACKGROUND

As more and more applications are introduced to mobile terminals, a user may not want to display application (in the figures, "App") icons on the desktop after the installation of applications, and need to hide the application icons.

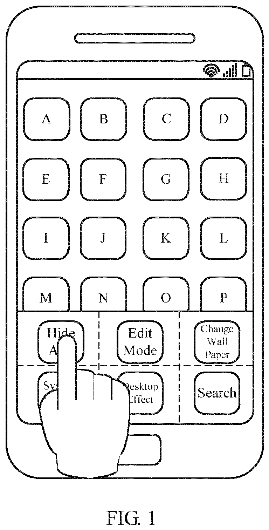

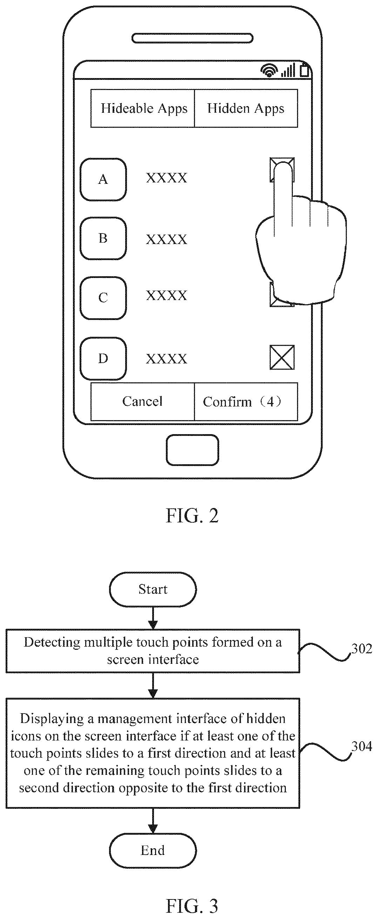

In the related art, the method used to hide application icons is as follows: call up a function menu on the desktop and select "Hide Apps" (as shown in Fig. 1), and check the applications that need to be hidden on the application list interface shown in Fig. 2, so as to hide the icons of the selected applications.

However, in the above process of hiding application icons, it is needed to switch interfaces repeatedly among desktop, function menu interface, and icon selecting interface, which makes the operation very complicated.

Thus, how to realize the hidden management of application icons quickly has become an urgent problem to be solved.

WO 2013/127055 A1 discloses a user interface for a hand-portable electronic device, where the interface has a privacy area that can be hidden from view and displayed when a particular user input is provided.

US 2010/0024020 A1 discloses a wireless mobile device in which access to certain programs is possible only by traversing a privacy gate.

### SUMMARY

The invention is defined by the independent claims. Further aspects of the invention are outlined in the dependent claims. Embodiments relate only to claimed combinations of features. In the following, when the term "embodiment" relates to unclaimed combinations of features, said term has to be understood as referring to examples of the present invention.

In one aspect, the present invention provides a terminal control method as set out in claim 1. By detecting the movement tracks of multiple touch points on the screen interface of a terminal, a management interface of hidden icons can be opened quickly without interface switching, and the operation is convenient and efficient, thereby improving operational efficiency.

The terminal control method comprises: detecting multiple touch points formed on a screen interface; and displaying a management interface of hidden icons on the screen interface if at least one of the touch points slides to a first direction and at least one of the remaining touch points slides to a second direction opposite to the first direction.

In this technical solution, by detecting the movement tracks of multiple touch points on the screen interface (that is, there are touch points which slide along opposite directions at the same time) and determining to display the management interface of hidden icons on the screen interface accordingly, there is no need to switch interfaces repeatedly or to select corresponding function keys, and the operation is convenient and efficient.

A hidden icon can be any application icon. As one preferred embodiment, the hidden icon can be the icon of a private application that the user does not want to be revealed, such as "Diary," "Account Management," etc. Through the management interface of hidden icons, the user can execute hiding or un-hiding on any application icon.

The method further comprises: displaying the contents initially displayed on the screen interface in a first area, and displaying the management interface of hidden icons in a second area other than the first area on the screen interface.

In this technical solution, the contents initially displayed on the screen interface and the management interface of hidden icons are displayed in the first area and the second area respectively, thus to determine directly whether an application icon has been hidden by checking the area in which the application icon is located. The application icon has not been hidden if this application icon is located in the first area; the application icon has been hidden if this application icon is located in the second area.

Meanwhile, by displaying the contents initially displayed and the management interface of hidden icons on the screen interface simultaneously, it makes the user easy to facilitate the interactions between the contents initially displayed and the management interface of hidden icons. For example, a hidden setting of an application icon of the contents initially displayed can be achieved by dragging the application icon into the management interface of hidden icons, or an un-hiding setting can be achieved by dragging the application icon along an opposite direction, thereby simplifying the operation process.

The contents initially displayed may include all of the contents initially displayed on the screen interface, and as a result, thumbnail display or deformation is needed for the contents initially displayed (such as compressing the gap between icons); alternatively, the contents initially displayed may only include parts of the contents (such as only application icons are displayed), thereby avoiding thumbnail display, which makes the user convenient to view.

The method further comprises: determining a display position of the first area or the second area on the screen interface according to the position information of the multiple touch points on the screen interface.

In this technical solution, when the user conduct operation via multiple touch points, since the positions of the multiple touch points are likely to be easier for the user to operate or view, it will be convenient for the user to further achieve the operation on the management interface of hidden icons when determining the display position of the first area or the second area based on the position information.

In the above technical solution, when displaying the first area or the second area according to the position information of the multiple touch points, as one preferred embodiment, the initial position of the multiple touch points can be included in the second area; as another preferred embodiment, the area formed when the multiple touch points slide along a first direction and a second direction can be deemed as the second area.

A person of ordinary skill in the art should be noted that, the display position of the management interface of hidden icons can be arbitrary, and there are many other specific methods for determining the display position; therefore, the explanation herein is not intended to be a specific limitation.

The abovementioned technical solution further comprises: if any application icon in the first area is dragged into the second area, setting the application icon being dragged into the second area to be a hidden icon from a non-hidden icon; and/or, if any application icon in the second area is dragged into the first area, setting the application icon being dragged into the first area to be a non-hidden icon from a hidden icon.

In this technical solution, the display area of initial icons of the screen interface is the first area, and the display area of the management interface of hidden icons is the second area. Since the above two areas are displayed on the screen interface of the terminal simultaneously, the hidden or non-hidden setting of application icons can be achieved by the dragging thereof; therefore, the operation is convenient and efficient, thereby improving operational efficiency.

In the abovementioned technical solution, preferably, it further comprises: if any application icon is dragged into the first area or the second area, rearranging the application icons in the first area and the second area according to a predetermined sequence.

In this technical solution, after the application icon being dragged into the first area or the second area, the display position occupied by the application icon originally will be free, thus causing waste of the display space and disorder of the icon arrangement. Therefore, the free position appeared after the movement of the application icon will be filled in time by rearranging the icons in the first area and the second area, without the need to arrange the icons manually by the user. In this technical solution, the predetermined sequence of the arrangement of icons can be any one of the following or a combination thereof: the first letter of the name, the time of installation, and the frequency of use, etc.

In the abovementioned technical solution, preferably, when any application icon is dragged to a target position in the first area or the second area, it further comprises: determining an application icon corresponding to the target position in order for said any application icon to occupy a corresponding display position of the determined application icon, and rearranging other application icons that arranged after the corresponding display position; wherein, if the target position corresponds to a plurality of application icons, the application icon arranged at the end will be deemed as the corresponding application icon.

In this technical solution, by determining whether there is an application icon in the target position and performing rearrangement after the dragging of an icon, the user can select the display position of the application icon currently being dragged according to needs, and affect the original application icon arrangement as little as possible.

In this technical solution, if the target position corresponds to a plurality of application icons, the application icon arranged at the end will be determined according to a predetermined arrangement sequence of the terminal. For instance, as a preferred embodiment, the arrangement sequence is as follows: in the horizontal direction, the order of arrangement of the application icons on the left side is higher than that of the application icons on the right side; in the vertical direction, the order of arrangement of the application icons on the upper side is higher than that of the application icons on the lower side.

In any of the abovementioned technical solutions, preferably, the touch points are located in the gap between application icons on the screen interface. By making the touch points in the gap between application icons, erroneous operation due to the overlapping of the touch points and application icons can be avoided, which is helpful to improve the accuracy of operation.

In another aspect, the present invention provides a terminal control device as set out in claim 6. The terminal control device comprises: a touch point detecting unit, configured to detect multiple touch points formed on a screen interface of a terminal; a slide determining unit, configured to determine whether at least one of the touch points slides to a first direction and at least one of the remaining touch points slides to a second direction opposite to the first direction; and an interface displaying unit, configured to display a management interface of hidden icons on the screen interface if the determination result of the slide determining unit is yes.

In this technical solution, by detecting the movement tracks of multiple touch points on the screen interface (that is, there are touch points which slide along opposite directions) and determining the management interface of hidden icons displayed on the screen interface accordingly, there is no need to switch interfaces repeatedly and to select corresponding function keys, and the operation is convenient and efficient.

A hidden icon can be any application icon. As one preferred embodiment, the hidden icon can be the icon of a private application that the user does not want to be revealed, such as "Diary," "Account Management," etc. Through the management interface of hidden icons, the user can execute hiding or un-hiding on any application icon.

The interface displaying unit is configured to: display the contents initially displayed on the screen interface in a first area, and display the management interface of hidden icons in a second area other than the first area on the screen interface.

In this technical solution, the contents initially displayed on the screen interface and the management interface of hidden icons are displayed in the first area and the second area respectively, thus to determine directly whether an application icon has been hidden by checking the area in which the application icon is located. The application icon has not been hidden if this application icon is located in the first area; the application icon has been hidden if this application icon is located in the second area.

Meanwhile, by displaying the contents initially displayed and the management interface of hidden icons on the screen interface simultaneously, it makes the user easy to facilitate the interactions between the contents initially displayed and the management interface of hidden icons. For example, a hidden setting of an application icon of the contents initially displayed can be achieved by dragging the application icon into the management interface of hidden icons, or an un-hiding setting can be achieved by dragging the application icon along an opposite direction, thereby simplifying the operation process.

The contents initially displayed may include all of the contents initially displayed on the screen interface, and as a result, thumbnail display or deformation is needed for the contents initially displayed (such as compressing the gap between icons); alternatively, the contents initially displayed may only include parts of the contents (such as displaying application icons only), thereby avoiding thumbnail display, which makes the user convenient to view.

The device further comprises: a position determining unit, configured to determine a display position of the first area or the second area on the screen interface according to the position information of the multiple touch points on the screen interface, whereby the interface displaying unit will display the first area and the second area.

In this technical solution, when the user conduct operation via multiple touch points, since the positions of the multiple touch points are likely to be easier for the user to operate or view, it will be convenient for the user to further achieve the operation on the management interface of hidden icons when determining the display position of the first area or the second area based on the position information.

In the above technical solution, when displaying the first area or the second area according to the position information of the multiple touch points, as one preferred embodiment, the initial position of the multiple touch points can be included in the second area; as another preferred embodiment, the area formed when the multiple touch points slide along a first direction and a second direction can be deemed as the second area.

A person of ordinary skill in the art should be noted that, the display position of the management interface of hidden icons can be arbitrary, and there are many other specific methods for determining the display position; therefore, the explanation herein is not intended to be a specific limitation.

The abovementioned technical solution further comprises: a hiding setting unit, configured to set the application icon being dragged into the second area to be a hidden icon from a non-hidden icon if any application icon in the first area is dragged into the second area; and/or, set the application icon being dragged into the first area to be a non-hidden icon from a hidden icon if any application icon in the second area is dragged into the first area.

In this technical solution, the display area of initial icons of the screen interface is the first area, and the display area of the management interface of hidden icons is the second area. Since the above two areas are displayed on the screen interface of the terminal simultaneously, the hidden or non-hidden setting of application icons can be achieved by the dragging thereof; therefore, the operation is convenient and efficient, thereby improving operational efficiency.

In the abovementioned technical solution, preferably, it further comprises: an icon arranging unit, configured to rearrange the application icons in the first area and the second area according to a predetermined sequence if any application icon is dragged into the first area or the second area.

In this technical solution, after the application icon being dragged into the first area or the second area, the display position occupied by the application icon originally will be free, thus causing waste of the display space and disorder of the icon arrangement. Therefore, the free position appeared after the movement of the application icon will be filled in time by rearranging the icons in the first area and the second area, without the need to arrange the icons manually by the user. In this technical solution, the predetermined sequence of the arrangement of icons can be any one of the following or a combination thereof: the first letter of the name, the time of installation, and the frequency of use, etc.

In the abovementioned technical solution, preferably, it further comprises: an icon determining unit, configured to, when any application icon is dragged to a target position in the first area or the second area, determine an application icon corresponding to the target position in order for said any application icon to occupy a corresponding display position of the determined application icon; wherein, if the target position corresponds to a plurality of application icons, take the application icon arranged at the end as the corresponding application icon; wherein, the icon arranging unit is configured to rearrange other application icons that arranged after the corresponding display position.

In this technical solution, by determining whether there is an application icon in the target position and rearranging after the dragging of the icon, the user can select the display position of the application icon currently being dragged according to needs, and affect the original application icon arrangement as little as possible.

In this technical solution, if the target position corresponds to a plurality of application icons, the application icon arranged at the end will be determined according to a predetermined arrangement sequence of the terminal. For instance, as a preferred embodiment, the arrangement sequence is as follows: in the horizontal direction, the order of arrangement of the application icons on the left side is higher than that of the application icons on the right side; in the vertical direction, the order of arrangement of the application icons on the upper side is higher than that of the application icons on the lower side.

In any of the abovementioned technical solutions, preferably, the touch points are located in the gap between application icons on the screen interface. By making the touch points in the gap between application icons, erroneous operation due to the overlapping of the touch points and application icons can be avoided, which is helpful to improve the accuracy of operation.

Also disclosed herein is a program product stored in a non-volatile machine readable medium for terminal control. The program product includes machine executable instructions, when executed by a computer system, causing the system to execute the following steps: detecting multiple touch points formed on a screen interface; displaying a management interface of hidden icons on the screen interface if at least one of the touch points slides to a first direction and at least one of the remaining touch points slides to a second direction opposite to the first direction.

Also disclosed herein is a non-volatile machine readable medium storing a program product for terminal control. The program product includes machine executable instructions, when executed by a computer system, causing the system to execute the following steps: detecting multiple touch points formed on a screen interface; displaying a management interface of hidden icons on the screen interface if at least one of the touch points slides to a first direction and at least one of the remaining touch points slides to a second direction opposite to the first direction.

Also disclosed herein is a machine-readable program, configured to cause the machine to execute any of the terminal control methods described in the abovementioned technical solutions.

Also disclosed herein is a storage medium storing a machine-readable program. The machine-readable program is configured to cause the machine to execute any of the terminal control methods described in the abovementioned technical solutions.

By means of the abovementioned technical solution, the management interface of hidden icons can be opened quickly without interface switching, and the operation is convenient and efficient.

### BRIEF DESCRIPTION OF THE DRAWINGS

FIG. 1 is a schematic view illustrating an interface of clicking the icon of "Hide Apps" in the related art.
FIG. 2 is a schematic view illustrating an interface of searching the applications to be hidden in the related art.
FIG. 3 is a flow chart illustrating a terminal control method in accordance with one embodiment of the invention.
FIG. 4A- 4E are schematic views illustrating an interface of hiding or un-hiding application icons according to a gesture in accordance with one embodiment of the invention.
FIG. 5 is a specific flow chart illustrating the process of hiding application icons in accordance with one embodiment of the invention.
FIG. 6 is a specific flow chart illustrating the process of un-hiding application icons in accordance with one embodiment of the invention.
FIG. 7 is a block diagram illustrating a terminal control device in accordance with one embodiment of the invention.

### DETAILED DESCRIPTION OF ILLUSTRATED EMBODIMENTS

To understand the above-mentioned purposes, features, and advantages of the present disclosure more clearly, the present disclosure will be further described in detail below in combination with the accompanying drawings and the specific implementations. It should be noted that, the embodiments of the present application and the features in the embodiments may be combined with one another without conflicts.

Many specific details will be described below for sufficiently understanding the present disclosure. However, the present disclosure may also be implemented by adopting other manners different from those described herein. Accordingly, the protection scope of the present invention is not limited by the specific embodiments disclosed below.

### I. The Calling of an Interface

FIG. 3 is a flow chart illustrating a terminal control method in accordance with one embodiment of the invention.

As shown in FIG. 3, the terminal control method in accordance with one embodiment of the invention comprises: step 302, detecting multiple touch points formed on a screen interface; step 304, displaying a management interface of hidden icons on the screen interface if at least one of the touch points slides to a first direction and at least one of the remaining touch points slides to a second direction opposite to the first direction.

In this technical solution, by detecting the movement tracks of multiple touch points on the screen interface (that is, there are touch points which slide along opposite directions) and determining the management interface of hidden icons displayed on the screen interface accordingly, there is no need to switch interfaces repeatedly and to select corresponding function keys, and the operation is convenient and efficient.

A hidden icon can be any application icon. As one preferred embodiment, the hidden icon can be the icon of a private application that the user does not want to be revealed, such as "Diary," "Account Management," etc. Through the management interface of hidden icons, the user can execute hiding or un-hiding on any application icon.

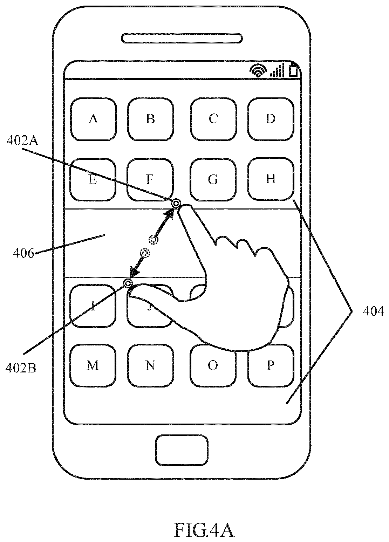

As one specific application scenario, FIG. 4A illustrates a specific situation that two fingers of the user slide in opposite directions to open the management interface of hidden icons.

As shown in FIG. 4A, it is supposed that two touch points are formed on the screen interface of the terminal with two fingers of the user, that is, a touch point 402A and a touch point 402B. If the touch point 402A and the touch point 402B slide in opposite directions, for instance, the touch point 402A slides upward and the touch point 402B slides downward, the management interface of hidden icons will be called up on the screen interface of the terminal without interface switching, and the operation is convenient and efficient.

Preferably, in FIG. 4A, the contents initially displayed on the screen interface are displayed in a first area 404, and the management interface of hidden icons is displayed in a second area 406 other than the first area 404 on the screen interface.

In this technical solution, the contents initially displayed on the screen interface and the management interface of hidden icons are displayed in the first area 404 and the second area 406 respectively, thereby determining directly whether an application icon has been hidden by checking the area in which the application icon is located. The application icon has not been hidden if this application icon is located in the first area 404; the application icon has been hidden if this application icon is located in the second area 406.

Preferably, this technical solution further comprises: determining a display position of the first area 404 or the second area 406 on the screen interface according to the position information of the multiple touch points (such as the touch point 402A and the touch point 402B, etc.) on the screen interface.

In this technical solution, when the user conduct operation via multiple touch points, since the positions of the multiple touch points are likely to be easier for the user to operate or view, it will be convenient for the user to further achieve the operation on the management interface of hidden icons when determining the display position of the first area 404 or the second area 406 based on the position information.

In the above technical solution, when displaying the first area or the second area according to the position information of the multiple touch points, a number of different methods can be used.

As one preferred embodiment, the initial positions of the multiple touch points can be included in the second area 406. Specially, for example, the initial positions (illustrated by dotted lines) of the touch point 402A and the touch point 402b are included in the second area 406 of FIG. 4A.

As another preferred embodiment, an area formed when the multiple touch points slide along a first direction and a second direction can be deemed as the second area 406. Specially, such as in FIG. 4A, the upper and lower frames of the second area 406 correspond to the final positions (illustrated by solid lines) of the touch point 402A and the touch point 402B respectively. Moreover, the upper and lower frames of the second area 406 can slide along with the touch point 402A and the touch point 402B to achieve dynamic position change in the vertical direction, as if the user has "expanded" the second area 406 with fingers.

It is to be noted that:
First, FIG. 4A illustrates the embodiment in which the first area 404 and the second area 406 are displayed on the screen interface of the terminal simultaneously. A person of ordinary skill in the art will understand that, it can also be possible to only display the management interface of hidden icons on the screen interface through the sliding of multiple touch points, which is equivalent to the display state as shown in FIG. 2.

Second, in the first area 404 as illustrated in FIG. 4A, the contents initially displayed may include all of the contents initially displayed on the screen interface, and as a result, thumbnail display or deformation is needed for the contents initially displayed (such as compressing the gap between icons); alternatively, the contents initially displayed may only include parts of the contents (such as only application icons are displayed), thereby avoiding thumbnail display, which makes the user convenient to view.

### II. The Hiding of Icons

By displaying the first area 404 and the second area 406 simultaneously, that is, by displaying the contents initially displayed and the management interface of hidden icons on the screen interface simultaneously, it makes the user easy to facilitate the interactions between the contents initially displayed and the management interface of hidden icons.

For instance, in this technical solution, preferably, it further comprises: if any application icon in the first area 404 is dragged into the second area 406, setting the application icon being dragged into the second area 406 to be a hidden icon from a non-hidden icon.

In this technical solution, the display area of initial icons of the screen interface is the first area 404, and the display area of the management interface of hidden icons is the second area 406. Since the above two areas are displayed on the screen interface of the terminal simultaneously, the hidden or non-hidden setting of application icons can be achieved by the dragging thereof; therefore, the operation is convenient and efficient, thereby improving operational efficiency.

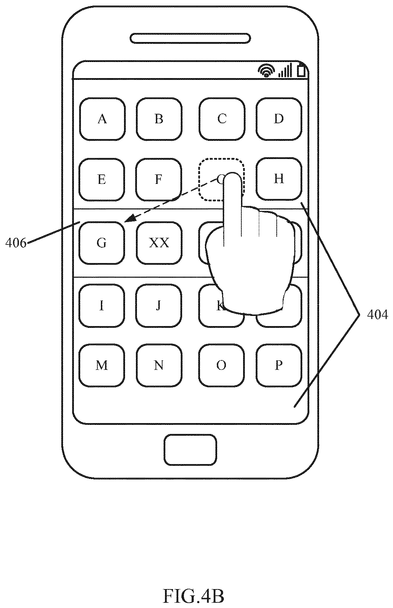

To be more specific, FIG. 4B is a schematic view illustrating an interface of dragging an application icon to a management interface 402 of hidden icons for hiding.

As shown in FIG. 4B, when the management interface of hidden icons is displayed in the second area 406, the hiding of the icon of application G can be achieved directly by dragging the icon of application G directly to the management interface of hidden icons.

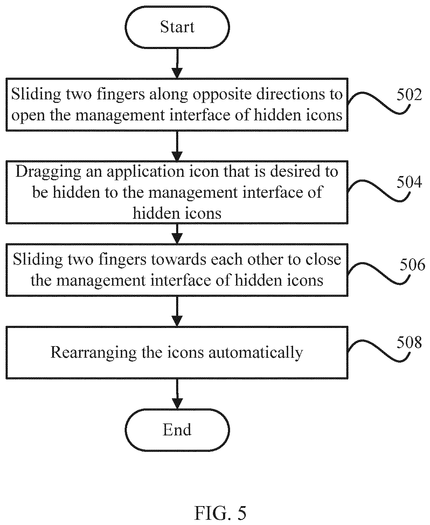

FIG. 5 is a specific flow chart illustrating the process of hiding application icons in accordance with one embodiment of the invention.

As shown in FIG. 5, the specific process of hiding application icons comprises:

Step 502, sliding two fingers of the user along opposite directions to open the management interface of hidden icons on the desktop of the terminal.

Step 504, dragging an application icon that is desired to be hidden to the management interface of hidden icons by the user to achieve the hiding of the application icon.

Step 506, when the dragging of all the application icons that are desired to be hidden is completed, sliding two fingers of the user towards each other to close the management interface of hidden icons.

Step 508, filling the blank of the hidden application icon with the next icon, and rearranging the icons on the desktop according to a predetermined rule.

### III. The Selection of Icons

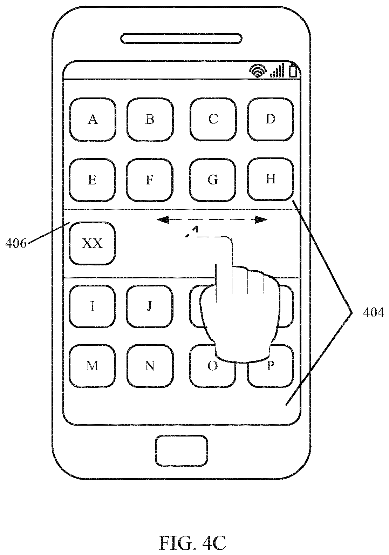

FIG. 4C is a schematic view illustrating an interface of sliding the fingers of the user left and right on the management interface of hidden icons.

As shown in FIG. 4C, on the management interface of hidden icons, not all of the hidden icons may be displayed on one screen because of the limited display space of the screen interface of the terminal. The hidden icons can be spread across multiple screens in order to facilitate the management of all the hidden icons; this enables the user to slide fingers left and right on the management interface of hidden icons to achieve the operation of flipping pages among multiple screens, therefore, the user can check any hidden icon and conduct management, such as deleting, un-hiding, etc.

### IV. The Un-Hiding of Icons

In the embodiment illustrated in FIG. 4A, preferably, it may comprise: if any application icon in the second area 406 is dragged into the first area 404, setting the application icon being dragged into the first area 404 to be a non-hidden icon from a hidden icon.

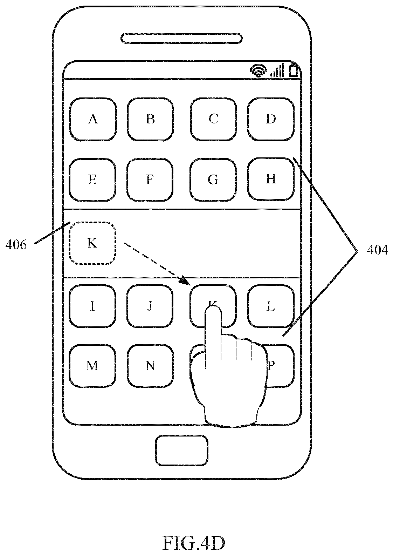

Specifically, FIG. 4D is a schematic view illustrating an interface of dragging an application icon to achieve un-hiding.

As shown in FIG. 4D, on the management interface of hidden icons, application icon K, which is an icon that is desired to be hidden, has been found by the user, will be dragged directly to a target position in the first area 404 to achieve the un-hiding thereof.

In this technical solution, the display area of initial icons of the screen interface is the first area 404, and the display area of the management interface of hidden icons is the second area 406. Since the above two areas are displayed on the screen interface of the terminal simultaneously, the hidden or non-hidden setting of application icons can be achieved by the dragging thereof; therefore, the operation is convenient and efficient, thereby improving operational efficiency.

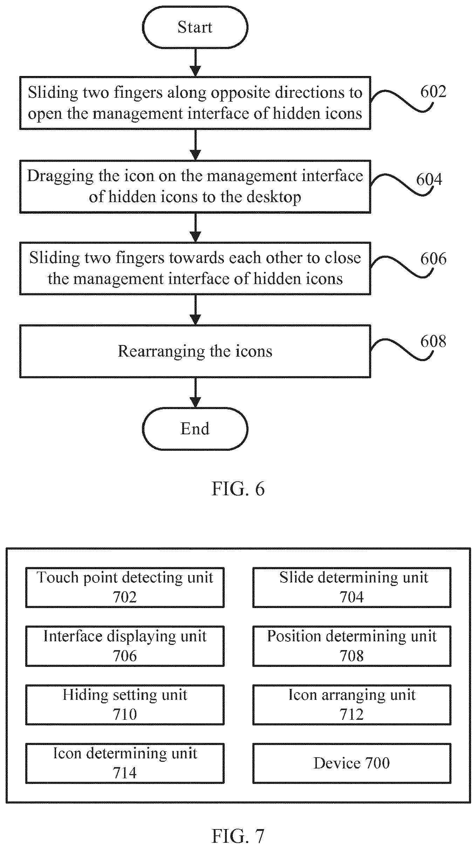

FIG. 6 is a specific flow chart illustrating the process of un-hiding application icons in accordance with one embodiment of the invention, wherein the process comprises:
Step 602, sliding two fingers of the user along opposite directions to open the management interface of hidden icons on the desktop of the terminal.

Step 604, dragging an application icon that is desired to be non-hidden to the display area on the desktop by the user to achieve the un-hiding of the application icon.

Step 606, when the dragging of all the application icons that are desired to be non-hidden is completed, sliding two fingers of the user towards each other to close the management interface of hidden icons.

Step 608, the non-hidden application icon occupying the icon in the target position on the display area on the desktop; rearranging the icons on the desktop according to a predetermined rule.

### V. The Arrangement of Icons

In the abovementioned technical solution, preferably, it further comprises: rearranging the application icons in the first area 404 and the second area 406 according to a predetermined sequence if any application icon is dragged into the first area 404 or the second area 406.

In this technical solution, after the application icon being dragged into the first area 404 or the second area 406, the display position occupied by the application icon originally will be free, thus causing a waste of the display space and disorder of the icon arrangement. Therefore, the free position appeared after the movement of the application icon will be filled in time by rearranging the icons in the first area 404 and the second area 406, without the need to arrange the icons manually by the user.

To be more specific, the predetermined sequence of the arrangement of icons can be any one of the following or a combination thereof: the first letter of the name, the time of installation, and the frequency of use, etc.

For instance, as can be seen from the comparison of FIG. 4B and FIG. 4C, in FIG. 4B, the icon of application G has not yet been hidden; in FIG. 4C, the icon of application G has been hidden, and the remaining application icons in the first area 404 will be rearranged (in the figure, the remaining application icons on the interface of the terminal are rearranged automatically according to the sequence of the first letter of the names of the applications).

Preferably, when any application icon is dragged to the target position in the first area 404 or the second area 406, it further comprises: determining an application icon corresponding to the target position in order for said any application icon to occupy a corresponding display position of the determined application icon, and rearranging other application icons that arranged after the corresponding display position; wherein, if the target position corresponds to a plurality of application icons, the application icon arranged at the end will be deemed as the corresponding application icon.

In this technical solution, by determining whether there is an application icon in the target position and performing rearrangement after the dragging of an icon, the user can select the display position of the application icon currently being dragged according to needs, and affect the original application icon arrangement as little as possible.

In this technical solution, if the target position corresponds to a plurality of application icons, the application icon arranged at the end will be determined according to a predetermined arrangement sequence of the terminal. For instance, as a preferred embodiment, the arrangement sequence is as follows: in the horizontal direction, the order of arrangement of the application icons on the left side is higher than that of the application icons on the right side; in the vertical direction, the order of arrangement of the application icons on the upper side is higher than that of the application icons on the lower side.

Take FIG. 4D as an example, when the icon of application K is dragged to the first area 404, icon K will occupy the position of icon L if the target position of the dragging of icon K is the position of icon L, and icon L will move backward. The position of the icon that is arranged at the end will be selected as the target position of the dragging of icon K if the target position is an intermediate position between icon J and icon L; that is, the position of icon L will be selected as the target position, and icon K will occupy the position of icon L and icon L will move backward, thereby achieving the un-hiding of application K. The position of the icon that is arranged at the end will be selected as the target position of the dragging of icon K if the target position is an intermediate position among icon A, icon B, icon E, and icon F; that is, the position of icon F will be selected as the target position, and icon K will occupy the position of icon F and icon F will move backward, thereby achieving the un-hiding of application K.

### VI. The Closure of the Interface

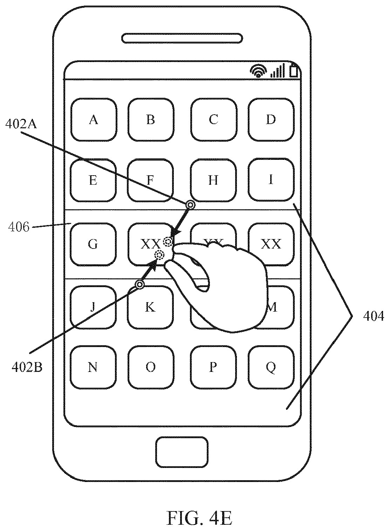

FIG. 4E is a schematic view illustrating an interface 402 of closing the management interface of hidden icons.

As illustrated in FIG. 4E, after the management operation of the management interface of hidden icons has been completed, as one preferred embodiment, the management interface of hidden icons can be closed by sliding two fingers of the user along opposite directions on the management interface of hidden icons, such as sliding the touch point 402A from upper right to lower left, and sliding the touch point 402B from lower left to upper right; then the second area 406 will disappear and the first area 404 will be displayed full screen.

With regard to the management interface of hidden icons, obviously there can also be other ways that can be used for the closure thereof, for example, click the blank area in the first area 404, click the "Return" button in the terminal, etc.

The controlling process on the screen of the terminal of the terminal control method in accordance with one embodiment of the present invention has been described in detail with reference to the drawings, it should be noted that, in any of the abovementioned technical solutions, as a preferred embodiment, all of the touch points are located in the gap between application icons on the screen interface. By making the touch points in the gap between application icons, erroneous operation due to the overlapping of the touch points and application icons can be avoided, which is helpful to improve the accuracy of operation.

FIG. 7 is a block diagram illustrating a terminal control device in accordance with one embodiment of the invention.

As shown in FIG. 7, the terminal 700 in accordance with the embodiment of the invention comprises: a touch point detecting unit 702, configured to detect multiple touch points formed on a screen interface of a terminal; a slide determining unit 704, configured to determine whether at least one of the touch points slides to a first direction and at least one of the remaining touch points slides to a second direction opposite to the first direction; and an interface displaying unit 706, configured to display a management interface of hidden icons on the screen interface if the determination result of the slide determining unit 704 is yes.

In this technical solution, by detecting the movement tracks of multiple touch points on the screen interface (that is, there are touch points which slide along opposite directions) and determining the management interface of hidden icons displayed on the screen interface accordingly, there is no need to switch interfaces repeatedly and to select corresponding function keys, and the operation is convenient and efficient.

A hidden icon can be any application icon. As one preferred embodiment, the hidden icon can be the icon of a private application that the user does not want to be revealed, such as "Diary," "Account Management," etc. Through the management interface of hidden icons, the user can execute hiding or un-hiding on any application icon.

In the abovementioned technical solution, preferably, the interface displaying unit 706 is configured to: display the contents initially displayed on the screen interface in a first area, and display the management interface of hidden icons in a second area other than the first area on the screen interface.

In this technical solution, the contents initially displayed on the screen interface and the management interface of hidden icons are displayed in the first area and the second area respectively, thus to determine directly whether an application icon has been hidden by checking the area in which the application icon is located. The application icon has not been hidden if this application icon is located in the first area; the application icon has been hidden if this application icon is located in the second area.

Meanwhile, by displaying the contents initially displayed and the management interface of hidden icons on the screen interface simultaneously, it makes the user easy to facilitate the interactions between the contents initially displayed and the management interface of hidden icons. For example, a hidden setting of an application icon of the contents initially displayed can be achieved by dragging the application icon into the management interface of hidden icons, or an un-hiding setting can be achieved by dragging the application icon along an opposite direction, thereby simplifying the operation process.

The contents initially displayed may include all of the contents initially displayed on the screen interface, and as a result, thumbnail display or deformation is needed for the contents initially displayed (such as compressing the gap between icons); alternatively, the contents initially displayed may only include parts of the contents (such as displaying application icons only), thereby avoiding thumbnail display, which makes the user convenient to view.

In the abovementioned technical solution, preferably, it further comprises: a position determining unit 708, configured to determine a display position of the first area or the second area on the screen interface according to the position information of the multiple touch points on the screen interface, whereby the interface displaying unit will display the first area and the second area.

In this technical solution, when the user conduct operation via multiple touch points, since the positions of the multiple touch points are likely to be easier for the user to operate or view, it will be convenient for the user to further achieve the operation on the management interface of hidden icons when determining the display position of the first area or the second area based on the position information.

In the above technical solution, when displaying the first area or the second area according to the position information of the multiple touch points, as one preferred embodiment, the initial position of the multiple touch points can be included in the second area; as another preferred embodiment, the area formed when the multiple touch points slide along a first direction and a second direction can be deemed as the second area.

A person of ordinary skill in the art should be noted that, the display position of the management interface of hidden icons can be arbitrary, and there are many other specific methods for determining the display position; therefore, the explanation herein is not intended to be a specific limitation.

In the abovementioned technical solution, preferably, it further comprises: a hiding setting unit 710, configured to set the application icon being dragged into the second area to be a hidden icon from a non-hidden icon if any application icon in the first area is dragged into the second area; and/or, set the application icon being dragged into the first area to be a non-hidden icon from a hidden icon if any application icon in the second area is dragged into the first area.

In this technical solution, the display area of initial icons of the screen interface is the first area, and the display area of the management interface of hidden icons is the second area. Since the above two areas are displayed on the screen interface of the terminal simultaneously, the hidden or non-hidden setting of application icons can be achieved by the dragging thereof; therefore, the operation is convenient and efficient, thereby improving operational efficiency.

In the abovementioned technical solution, preferably, it further comprises: an icon arranging unit 712, configured to rearrange the application icons in the first area and the second area according to a predetermined sequence if any application icon is dragged into the first area or the second area.

In this technical solution, after the application icon being dragged into the first area or the second area, the display position occupied by the application icon originally will be free, thus causing waste of the display space and disorder of the icon arrangement. Therefore, the free position appeared after the movement of the application icon will be filled in time by rearranging the icons in the first area and the second area, without the need to arrange the icons manually by the user. In this technical solution, the predetermined sequence of the arrangement of icons can be any one of the following or a combination thereof: the first letter of the name, the time of installation, and the frequency of use, etc.

In the abovementioned technical solution, preferably, it further comprises: an icon determining unit 714, configured to, when any application icon is dragged to a target position in the first area or the second area, determine an application icon corresponding to the target position in order for said any application icon to occupy a corresponding display position of the determined application icon; wherein, if the target position corresponds to a plurality of application icons, take the application icon arranged at the end as the corresponding application icon; wherein, the icon arranging unit 712 is configured to rearrange other application icons that arranged after the corresponding display position.

In this technical solution, by determining whether there is an application icon in the target position and rearranging after the dragging of the icon, the user can select the display position of the application icon currently being dragged according to needs, and affect the original application icon arrangement as little as possible.

In this technical solution, if the target position corresponds to a plurality of application icons, the application icon arranged at the end will be determined according to a predetermined arrangement sequence of the terminal. For instance, as a preferred embodiment, the arrangement sequence is as follows: in the horizontal direction, the order of arrangement of the application icons on the left side is higher than that of the application icons on the right side; in the vertical direction, the order of arrangement of the application icons on the upper side is higher than that of the application icons on the lower side.

In any of the abovementioned technical solutions, preferably, the touch points are located in the gap between application icons on the screen interface. By making the touch points in the gap between application icons, erroneous operation due to the overlapping of the touch points and application icons can be avoided, which is helpful to improve the accuracy of operation.

In accordance with a further aspect of the invention, it is further provided a program product stored in a non-volatile machine readable medium for terminal control. The program product includes machine executable instructions, when executed by a computer system, causing the system to execute the following: detecting multiple touch points formed on a screen interface; displaying a management interface of hidden icons on the screen interface if at least one of the touch points slides to a first direction and at least one of the remaining touch points slides to a second direction opposite to the first direction.

In accordance with a further aspect of the invention, it is further provided a non-volatile machine readable medium storing a program product for terminal control. The program product includes machine executable instructions, when executed by a computer system, causing the system to execute the following: detecting multiple touch points formed on a screen interface; displaying a management interface of hidden icons on the screen interface if at least one of the touch points slides to a first direction and at least one of the remaining touch points slides to a second direction opposite to the first direction.

According to a further aspect of the disclosure, it is further provided a machine-readable program, configured to cause the machine to execute any of the terminal control methods described in the abovementioned technical solutions.

According to a further aspect of the disclosure, it is further provided a storage medium storing a machine-readable program. The machine-readable program is configured to cause the machine to execute any of the terminal control methods described in the abovementioned technical solutions.

The technical solutions of the present invention have been described in detail with reference to the drawings, in view of the requirement of switching interfaces repeatedly and the complicated operation, the present invention provides a terminal control method and a terminal, by detecting the movement tracks of multiple touch points on the screen interface of a terminal, the management interface of hidden icons can be opened quickly without interface switching, and the operation is convenient and efficient, thereby improving operational efficiency.

The foregoing descriptions are merely preferred embodiments of the present disclosure, rather than limiting the present disclosure. Various modifications and alterations may be made to the present disclosure for those skilled in the art.

## Claims

1. A terminal control method, comprising:
detecting (302) multiple touch points formed on a screen interface; and
displaying (304) a management interface of hidden icons on the screen interface, wherein contents initially displayed on the screen interface are displayed in in a first area on the screen interface, and the management interface of hidden icons is displayed in a second area other than the first area on the screen interface,
**characterised in that**:
the management interface of hidden icons is displayed if at least one of the touch points slides to a first direction and at least one of the remaining touch points slides to a second direction opposite to the first direction, and
a display position of the first area or the second area on the screen interface is determined according to position information of the multiple touch points on the screen interface; and wherein the method further comprises:
if any application icon in the first area is dragged (504) into the second area, setting the application icon being dragged into the second area to be a hidden icon from a non-hidden icon; and/or
if any application icon in the second area is dragged (604) into the first area, setting the application icon being dragged into the first area to be a non-hidden icon from a hidden icon.

2. The terminal control method of Claim 1, wherein the method further comprises:
if any application icon is dragged into the first area or the second area, rearranging (508) the application icons in the first area and the second area according to a predetermined sequence.

3. The terminal control method of Claim 2, wherein when any application icon is dragged to a target position in the first area or the second area, it further comprises:
determining an application icon corresponding to the target position in order for said any application icon to occupy a corresponding display position of the determined application icon, and rearranging other application icons that arranged after the corresponding display position;
wherein, if the target position corresponds to a plurality of application icons, the application icon arranged at the end will be deemed as the corresponding application icon.

4. The terminal control method of any one of Claims 1 to 3, wherein the touch points are located in the gap between application icons on the screen interface.

5. A terminal control device (700), comprising:
a touch point detecting unit (702), configured to detect multiple touch points formed on a screen interface of a terminal;
a slide determining unit (704); and
an interface displaying unit (706), configured to display a management interface of hidden icons on the screen interface if the determination result of the slide determining unit is yes,
wherein the interface displaying unit is configured to display contents initially displayed on the screen interface in a first area, and display the management interface of hidden icons in a second area other than the first area on the screen interface,
**characterised in that**:
the slide determining unit is configured to determine whether at least one of the touch points slides to a first direction and at least one of the remaining touch points slides to a second direction opposite to the first direction, and
the device further comprises a position determining unit (708) configured to determine a display position of the first area or the second area on the screen interface according to position information of the multiple touch points on the screen interface; and wherein the device further comprises
a hiding setting unit (710), configured to set the application icon being dragged into the second area to be a hidden icon from a non-hidden icon if any application icon in the first area is dragged into the second area; and/or, set the application icon being dragged into the first area to be a non-hidden icon from a hidden icon if any application icon in the second area is dragged into the first area.

6. The terminal control device of Claim 5, wherein the device further comprises:
an icon arranging unit (712), configured to rearrange the application icons in the first area and the second area according to a predetermined sequence if any application icon is dragged into the first area or the second area.

7. The terminal control device of Claim 6, wherein the device further comprises:
an icon determining unit (714), configured to, when any application icon is dragged to a target position in the first area or the second area, determine an application icon corresponding to the target position in order for said any application icon to occupy a corresponding display position of the determined application icon; wherein, if the target position corresponds to a plurality of application icons, take the application icon arranged at the end as the corresponding application icon; and
wherein, the icon arranging unit is configured to rearrange other application icons that arranged after the corresponding display position.

8. The terminal control device of any one of Claims 5 to 7, wherein the touch points are located in the gap between application icons on the screen interface.

## Patentansprüche

1. Verfahren zur Endgerätsteuerung, Folgendes umfassend:
Detektieren (302) von mehreren Berührungspunkten, die auf einer Bildschirmoberfläche ausgebildet sind; und
Anzeigen (304) einer Verwaltungsoberfläche von versteckten Symbolen auf der Bildschirmoberfläche, wobei Inhalte, die anfänglich auf der Bildschirmoberfläche angezeigt werden, in einem ersten Bereich auf der Bildschirmoberfläche angezeigt werden, und die Verwaltungsoberfläche von versteckten Symbolen in einem zweiten, anderen Bereich als dem ersten Bereich auf der Bildschirmoberfläche angezeigt wird,
**dadurch gekennzeichnet, dass**
die Verwaltungsoberfläche von versteckten Symbolen angezeigt wird, wenn zumindest einer der Berührungspunkte in eine erste Richtung gleitet und zumindest einer der restlichen Berührungspunkte in eine zweite Richtung entgegengesetzt zur ersten Richtung gleitet, und dass
ein Anzeigeabschnitt des ersten Bereichs oder des zweiten Bereichs auf der Bildschirmoberfläche entsprechend Positionsinformationen der mehreren Berührungspunkte auf der Bildschirmoberfläche bestimmt wird; und wobei das Verfahren ferner Folgendes umfasst:
wenn ein beliebiges Anwendungssymbol im ersten Bereich in den zweiten Bereich gezogen wird (504), Einstellen des in den zweiten Bereich gezogenen Anwendungssymbols als verstecktes Symbol von einem nicht-versteckten Symbol; und/oder
wenn ein beliebiges Anwendungssymbol im zweiten Bereich in den ersten Bereich gezogen wird (604), Einstellen des in den ersten Bereich gezogenen Anwendungssymbols als nicht-verstecktes Symbol von einem versteckten Symbol.

2. Verfahren zur Endgerätsteuerung nach Anspruch 1, wobei das Verfahren ferner Folgendes umfasst:
wenn ein Anwendungssymbol in den ersten Bereich oder in den zweiten Bereich gezogen wird, Neuanordnen (508) der Anwendungssymbole im ersten Bereich und im zweiten Bereich entsprechend einer vordefinierten Reihung.

3. Verfahren zur Endgerätsteuerung nach Anspruch 2, wobei, wenn ein beliebiges Anwendungssymbol in eine Zielposition im ersten Bereich oder im zweiten Bereich gezogen wird, das Verfahren ferner Folgendes umfasst:
Bestimmen eines der Zielposition entsprechenden Anwendungssymbols, so dass das beliebige Anwendungssymbol eine entsprechende Anzeigenposition des bestimmten Anwendungssymbols einnimmt, und Neuanordnen anderer Anwendungssymbole, die sich nach der entsprechenden Anzeigenposition anordnen; wobei
wenn die Zielposition einer Vielzahl von Anwendungssymbolen entspricht, das am Ende angeordnete Anwendungssymbol als das entsprechende Anwendungssymbol angesehen wird.

4. Verfahren zur Endgerätsteuerung nach einem der Ansprüche 1 bis 3, wobei die Berührungspunkte im Spalt zwischen Anwendungssymbolen auf der Bildschirmoberfläche angeordnet sind.

5. Vorrichtung (700) zur Endgerätsteuerung, Folgendes umfassend:
eine Berührungspunktdetektionseinheit (702), die konfiguriert ist, um mehrere auf einer Bildschirmoberfläche eines Endgeräts ausgebildete Berührungspunkte zu detektieren;
eine Gleitbewegungsbestimmungseinheit (704); und
eine Oberflächenanzeigeeinheit (706), die konfiguriert ist, um eine Verwaltungsoberfläche von versteckten Symbolen auf der Bildschirmoberfläche anzuzeigen, wenn das Bestimmungsergebnis der Gleitbewegungsbestimmungseinheit positiv ist,
wobei die Oberflächenanzeigeeinheit konfiguriert ist, um Inhalte, die anfänglich in einem ersten Bereich auf der Bildschirmoberfläche angezeigt werden, und die Verwaltungsoberfläche von versteckten Symbolen in einem zweiten, anderen Bereich als dem ersten Bereich auf der Bildschirmoberfläche anzuzeigen,
**dadurch gekennzeichnet, dass**
die Gleitbewegungsbestimmungseinheit konfiguriert ist, um zu bestimmen, ob zumindest einer der Berührungspunkte in eine erste Richtung gleitet und zumindest einer der restlichen Berührungspunkte in eine zweite Richtung entgegengesetzt zur ersten Richtung gleitet, und wobei
die Vorrichtung ferner eine Positionsbestimmungseinheit (708) umfasst, die konfiguriert ist, um eine Anzeigenposition des ersten Bereichs oder des zweiten Bereichs auf der Bildschirmoberfläche entsprechend Positionsinformationen der mehreren Berührungspunkte auf der Bildschirmoberfläche zu bestimmen, und wobei
die Vorrichtung ferner eine Versteck-Einstelleinheit (710) umfasst, die konfiguriert ist, um das Anwendungssymbol, das in den zweiten Bereich gezogen wird, als verstecktes Symbol von einem nicht-versteckten Symbol einzustellen, wenn ein beliebiges Anwendungssymbol im ersten Bereich in den zweiten Bereich gezogen wird; und/oder das Anwendungssymbol, das in den ersten Bereich gezogen wird, als nicht-verstecktes Symbol von einem versteckten Symbol einzustellen, wenn ein Anwendungssymbol im zweiten Bereich in den ersten Bereich gezogen wird.

6. Vorrichtung zur Endgerätsteuerung nach Anspruch 5, wobei die Vorrichtung ferner Folgendes umfasst:
eine Symbolanordnungseinheit (712), die konfiguriert ist, um die Anwendungssymbole im ersten Bereich und im zweiten Bereich entsprechend einer vordefinierten Reihung neu anzuordnen, wenn ein Anwendungssymbol in den ersten Bereich oder den zweiten Bereich gezogen wird.

7. Vorrichtung zur Endgerätsteuerung nach Anspruch 6, wobei die Vorrichtung ferner Folgendes umfasst:
eine Symbolbestimmungseinheit (714), die konfiguriert ist, um, wenn ein beliebiges Anwendungssymbol in eine Zielposition im ersten Bereich oder im zweiten Bereich gezogen wird, ein der Zielposition entsprechendes Anwendungssymbol zu bestimmen, so dass das beliebige Anwendungssymbol eine entsprechende Anzeigenposition des bestimmten Anwendungssymbols einnimmt; wobei, wenn die Zielposition einer Vielzahl von Anwendungssymbolen entspricht, das am Ende angeordnete Anwendungssymbol als das entsprechende Anwendungssymbol angesehen wird; und wobei
die Symbolanordnungseinheit konfiguriert ist, um andere Anwendungssymbole, die nach der entsprechenden Anzeigenposition angeordnet sind, neu anzuordnen.

8. Vorrichtung zur Endgerätsteuerung nach einem der Ansprüche 5 bis 7, wobei die Berührungspunkte im Spalt zwischen Anwendungssymbolen auf der Bildschirmoberfläche angeordnet sind.

## Revendications

1. Procédé de commande de terminal, comprenant les étapes consistant à :
détecter (302) de multiples points de contact formés sur une interface d'écran ; et
afficher (304) une interface de gestion d'icônes masquées sur l'interface d'écran, dans lequel des contenus initialement affichés sur l'interface d'écran sont affichés dans une première zone de l'interface d'écran, et l'interface de gestion d'icônes masquées est affichée dans une seconde zone autre que la première zone de l'interface écran,
**caractérisé en ce que** :
l'interface de gestion d'icônes masquées est affichée si au moins l'un des points de contact glisse dans une première direction et qu'au moins l'un des points de contact restants glisse dans une seconde direction opposée à la première direction, et
une position d'affichage de la première zone ou de la seconde zone sur l'interface d'écran est déterminée en fonction d'informations de position des multiples points de contact sur l'interface d'écran ; et dans lequel le procédé comprend en outre :
si une quelconque icône d'application de la première zone est déplacée (504) dans la seconde zone, la définition de l'icône d'application déplacée dans la seconde zone comme étant une icône masquée à partir d'une icône non masquée ; et/ou
si une quelconque icône d'application de la seconde zone est déplacée (604) dans la première zone, la définition de l'icône d'application déplacée dans la première zone comme étant une icône non masquée à partir d'une icône masquée.

2. Procédé de commande de terminal selon la revendication 1, dans lequel le procédé comprend en outre :
si une quelconque icône d'application est déplacée dans la première zone ou la seconde zone, le réagencement (508) des icônes d'application dans la première zone et la seconde zone selon une séquence prédéterminée.

3. Procédé de commande de terminal selon la revendication 2, dans lequel lorsqu'une quelconque icône d'application est déplacée vers une position cible dans la première zone ou la seconde zone, il comprend en outre les étapes consistant à :
déterminer une icône d'application correspondant à la position cible afin que ladite quelconque icône d'application occupe une position d'affichage correspondante de l'icône d'application déterminée, et réagencer d'autres icônes d'application qui sont agencées après la position d'affichage correspondante ;
dans lequel si la position cible correspond à une pluralité d'icônes d'application, l'icône d'application agencée à l'extrémité sera considérée comme l'icône d'application correspondante.

4. Procédé de commande de terminal selon l'une quelconque des revendications 1 à 3, dans lequel les points de contact sont situés dans l'intervalle entre des icônes d'application sur l'interface d'écran.

5. Dispositif de commande de terminal (700), comprenant :
une unité de détection de points de contact (702), configurée pour détecter de multiples points de contact formés sur une interface d'écran d'un terminal ;
une unité de détermination de glissement (704) ; et
une unité d'affichage d'interface (706), configurée pour afficher une interface de gestion d'icônes masquées sur l'interface d'écran si le résultat de la détermination de l'unité de détermination de glissement est oui,
dans lequel l'unité d'affichage d'interface est configurée pour afficher des contenus initialement affichés sur l'interface d'écran dans une première zone, et pour afficher l'interface de gestion d'icônes masquées dans une seconde zone autre que la première zone de l'interface d'écran, **caractérisé en ce que** :
l'unité de détermination de glissement est configurée pour déterminer si au moins un des points de contact glisse dans une première direction et au moins un des points de contact restants glisse dans une seconde direction opposée à la première direction, et
le dispositif comprend en outre une unité de détermination de position (708) configurée pour déterminer une position d'affichage de la première zone ou de la seconde zone sur l'interface d'écran en fonction d'informations de position des multiples points de contact sur l'interface d'écran ; et dans lequel le dispositif comprend en outre
une unité de définition de masquage (710), configurée pour définir l'icône d'application déplacée dans la seconde zone comme étant une icône masquée à partir d'une icône non masquée si une quelconque icône d'application de la première zone est déplacée dans la seconde zone ; et/ou, définir l'icône d'application déplacée dans la première zone comme étant une icône non masquée à partir d'une icône masquée si une quelconque icône d'application de la seconde zone est déplacée dans la première zone.

6. Dispositif de commande de terminal selon la revendication 5, dans lequel le dispositif comprend en outre :
une unité d'agencement d'icônes (712), configurée pour réagencer les icônes d'application dans la première zone et la seconde zone selon une séquence prédéterminée si une quelconque icône d'application est déplacée dans la première zone ou la seconde zone.

7. Dispositif de commande de terminal selon la revendication 6, dans lequel le dispositif comprend en outre :
une unité de détermination d'icône (714), configurée pour, lorsqu'une quelconque icône d'application est déplacée vers une position cible dans la première zone ou la seconde zone, déterminer une icône d'application correspondant à la position cible afin que ladite quelconque icône d'application occupe une position d'affichage correspondante de l'icône d'application déterminée ; et dans lequel, si la position cible correspond à une pluralité d'icônes d'application, pour prendre l'icône d'application disposée à la fin en tant qu'icône d'application correspondante ; et
dans lequel, l'unité d'agencement d'icônes est configurée pour réagencer d'autres icônes d'application qui sont agencées après la position d'affichage correspondante.

8. Dispositif de commande de terminal selon l'une quelconque des revendications 5 à 7, dans lequel les points de contact sont situés dans l'intervalle entre des icônes d'application sur l'interface d'écran.
